Europäisches Patentamt

European Patent Office

Office européen des brevets

(11) Publication number: **0 353 349**
**A1**

## (12) EUROPEAN PATENT APPLICATION

(21) Application number: **88201650.4**

(22) Date of filing: **29.07.88**

(51) Int. Cl.4: **E04H 4/00 , C02F 1/68**

(43) Date of publication of application:
**07.02.90 Bulletin 90/06**

(84) Designated Contracting States:
**DE FR GB IT**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Mills, Arthur Frederick
Brensham Court Malting Lane
Aldbury Near Tring Herts(GB)**

(74) Representative: **Bennett, David Arthur Horder
et al
4, York Road
London SE1 7NA(GB)**

(54) **Dispenser.**

(57) A dispenser for dispensing a dose of a product, for example a drain clearing powder, comprises a storage hopper (5), a transfer carriage exemplied by a roller (13) having a cavity (15), a housing (not shown) for the roller, and a mixing chamber (41) beneath the roller. A dose of powder is transferred from the hopper to the mixing chamber on rotation of the roller.

FIG.2

## DISPENSER

This invention relates to an apparatus for dispensing a dose of a flowable medium and to a method of using such an apparatus. The invention has particular application in the transfer of flowable granular materials, for example powders.

There are many methods for transferring powders on a large scale, for example the Archimedes screw, the pinch valve hopper and the fluidised transfer system. On a small scale, however, such systems are not economical and their practical success is doubtful, especially in the transfer of powders from a dry to wet environment. Devices for small scale transfer have not proved successful. As a result, it is common for powders which are dispensed on an occasional basis - for example drain cleaning products which might be needed daily in commercial kitchens - to be packaged in single dose sachets.

The present invention provides a simple apparatus for dispensing a dose of a flowable medium, such as a powder.

In accordance with the present invention there is provided an apparatus for dispensing a dose of a flowable medium, comprising a storage chamber for the medium, the storage chamber having a gravity-fed outlet; a medium transfer carriage having a surface to prevent the flow of medium through the outlet and a cavity which is selectively communicable with the outlet; and means for moving the carriage between a position in which the outlet communicates with the cavity and a position in which it does not, in which position medium in the cavity may leave it under gravity.

Preferably an apparatus according to the present invention further comprises a mixing chamber into which medium leaving the cavity falls, the mixing chamber having an inlet for liquid and an outlet for the resulting medium-containing liquid, hereinafter called a solution but which may in some cases be a dispersion. The admission of liquid, hereinafter referred to as water, to the chamber through the inlet and the exit of solution from the chamber through the outlet may be controlled externally of the apparatus, for example by the operation of taps in external pipework. Preferably, however, the apparatus itself comprises valve means to control the admission of water into the mixing chamber and to control the exit of the solution from the mixing chamber. These valve means could be taps to be operated manually but preferably the apparatus comprises control means for controlling the operation of the valve means as a function of the movement of the carriage, preferably in direct response to the movement or controlled by a timing means. Suitably, the control means permits the opening of the outlet valve means only after sufficient time has elapsed for the medium to dissolve or disperse in the water in the mixing chamber. Dissolution or dispersion, as well as eventual effectiveness of the solution, for example in clearing a drain if that is the field of use of the apparatus, may be improved if the solution is warmed. In preferred embodiments of the invention the apparatus comprises a means to heat the liquid. In one preferred embodiment of the invention the apparatus comprises a water tank wherein suficient water is admitted and heated to a suitable temperature before being admitted to the mixing chamber as has been described. A single valve means is preferably used to control the admission of water and the dispensing of the mixture is achieved by further admission of water to the mixing chamber causing the mixture to be dispensed by overflowing into a container or funnel suitably placed to surround the mixing chamber.

In one preferred embodiment of the invention the medium transfer carriage is a drum, which can conveniently be rotated through one revolution during a transfer cycle. In one form of the invention, the drum has a horizontal axis and the apparatus comprises a housing for the drum, the drum being a close fit in the housing and the housing being formed at one end with an aperture which forms or connects with the outlet from the storage chamber and at the other end with an outlet through which medium in the cavity may leave it under gravity.

The drum may be a precise fit in the housing and thereby form a continuous seal around its circumference, to prevent flow of medium from the storage chamber other than when the cavity communicates with the outlet thereof and to prevent the dum conveying water to the storage chamber, which might reduce the capacity of a powder medium to flow into the cavity and reduce its activity. Preferably, however, to facilitate manufacture, the drum is a close fit in the housing but sealing between the drum and the housing is ensured by appropriately located sealing strips, for example wiper blade seals.

In an alternative form the drum has a vertical axis and the apparatus comprises plates arranged at either end of the drum, with one plate having an inlet communicating with the storage chamber and the other plate having an outlet through which the medium may leave the cavity in the drum.

Preferably the plates at the ends of the drum form a continuous seal, to prevent flow of medium from the storage chamber other than when the cavity in the drum communicates with the storage chamber and to prevent the ingress of water or any significant amount of water vapour to the storage chamber, which might reduce the capacity of the powder medium to flow in the cavity and reduce its activity. Preferably, however, to facilitate manufacture, the tight seal required between the ends of the drum and the plates is achieved by means of tension springs.

In another embodiment the medium transfer carriage is a plate and the cavity is a through-aperture in the plate, the plate being sandwiched slidably between a top plate having a through-aperture which forms or connects with the outlet from the storage chamber and a bottom plate having a through-aperture, displaced from the through-aperture of the top plate in the direction of movement of the carriage, through which medium in the cavity may leave it under gravity. The transfer cycle requires a reciprocating movement of the plate. Suitable sealing may be achieved by making the carriage a sealing fit between the top and bottom plates or by appropriately located sealing strips.

The flowable medium can be a liquid but is commonly a granular material, for example a powder.

The storage chamber suitably tapers towards its outlet, to facilitate the flow of granular media. Since it is envisaged that the apparatus of the invention will have application in circumstances in which it is required to dispense a dose of medium at substantial intervals, the storage chamber is preferably provided with a lid, which may be lockable. Since some granular media which may be used with the apparatus are hygroscopic a seal is preferably provided between the lid and the rim of the storage chamber.

The medium transfer carriage is preferably driven by an electric motor. The movement may be initiated by a user for each transfer cycle or the motor may be programmed for operation at predetermined times.

The shutting off of the motor at the end of the cycle, the operation of any valve means, heating means and any other electrical or electro-mechanical functions are preferably controlled by a timer means. It is however essential to ensure that each operation of the transfer carriage is precise and for example to ensure that when the carriage is a drum that the drum always comes to rest in the same position; a switch operated by an indent or protrusion or other suitable means attached to the drum is used for this purpose.

The invention also provides a method of dispensing a solution or dispersion of a product, preferably a drain line waste degradation product, using an apparatus having a storage chamber for the product, with a gravity-fed outlet; a product transfer carriage having a surface to prevent the flow of product through the outlet and a cavity which is selectively communicable with the outlet; means for moving the carriage between a position in which the outlet communicates with the cavity to a position in which it does not, in which position the product in the cavity falls into a mixing chamber of the apparatus, the mixing chamber having an inlet and an outlet; valve means for controlling the admission of liquid into the mixing chamber and controlling the exit of the mixture from the mixing chamber; and means for controlling the valve means as a function of the movement of the carriage;

the method comprising moving the carriage from a position which the cavity communicates with the outlet and receives a dose of the product, to a position in which said surface prevents the flow of the product through the outlet and the product falls from the cavity into the mixing chamber; admitting liquid into the mixing chamber, before, during or after the admission of the product thereto; allowing a dwell time, for the product to dissolve or disperse in the liquid; and operating said valve means to dispense the solution or dispersion, preferably into a drain line.

The invention will now be further described, by way of example, with reference to the accompanying drawings in which:

Fig. 1 is a view in schematic cross section of a first embodiment of a medium transfer apparatus according to the invention;

Fig. 2 is a more detailed view of an embodiment of the invention of the type shown in Fig. 1, in schematic cross section;

Fig. 3 is a view in schematic cross section of a further embodiment according to the invention; and

Fig. 4 is a view in schematic cross section of a further embodiment according to the invention.

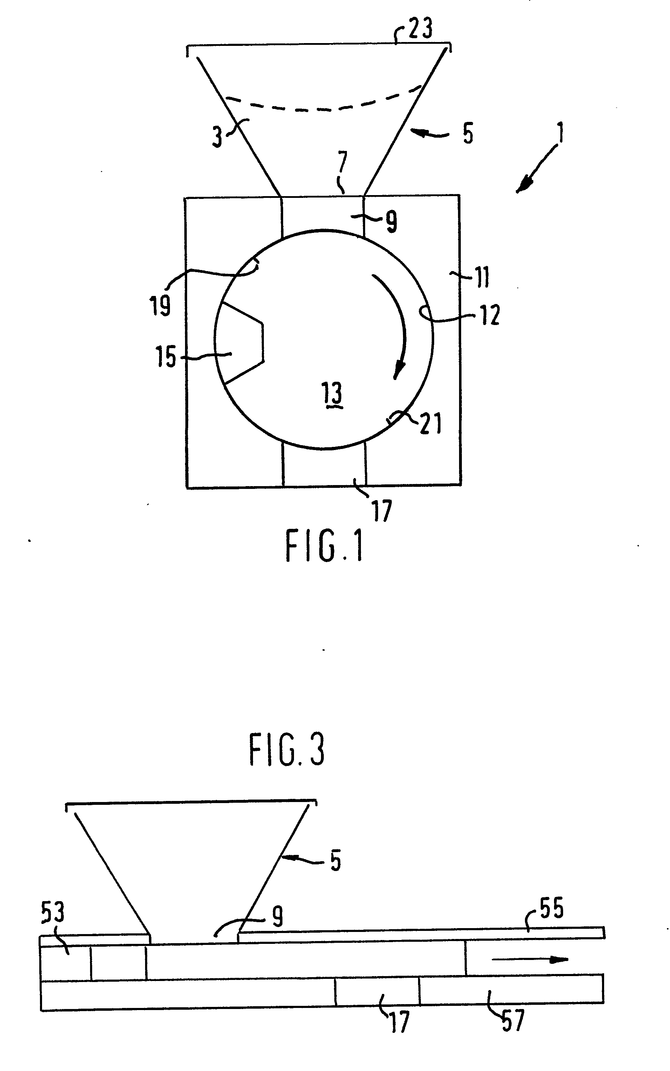

Referring to Fig. 1, an apparatus 1 for transferring a dose of a medium 3, namely a grease trap and drain line maintenance powder, comprises an upper storage chamber 5, in the form of a conical hopper. The outlet 7 of the hopper communicates with a orifice 9 formed in the upper part of a block 11. The orifice 9 leads to a horizontal circularly cylindrical bore 12 within the block. The bore contains a roller 13. The roller is of solid manufacture but has a cavity 15 at its surface. The block 11 has a second orifice 17 formed in its lower part, extending between the bore and the lower face of the block.

The roller 13 is a close fit in the bore but two "wiper blade" sealing strips 19, 21 extend along the bore and provide effective sealing. Further seals (not shown) are provided at the ends of the roller.

The storage chamber has a lockable lid 23.

The apparatus described above transfers a dose of powder corresponding to the size of the cavity 15 from the orifice 9 to the orifice 17. In use, the roller is turned clockwise from the rest position shown in Fig. 1. When the cavity 15 is beneath the orifice 9 powder 3 falls into it and fills it. The powder 3 in the cavity is conveyed to the second orifice 17, into which it falls from the cavity. Further rotation returns the roller to the rest position.

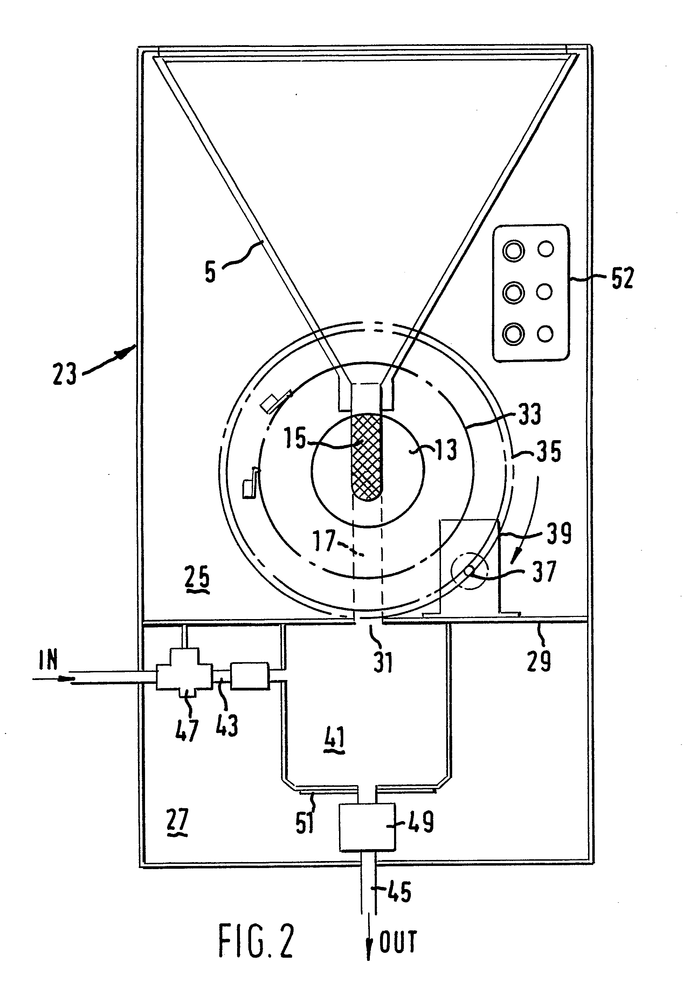

The apparatus of Fig. 2 comprises a cabinet 23 having an upper, larger, "dry" section 25 and a lower, smaller, "wet" section 27. The sections 25 and 27 are separated by a partition wall 29. The wall 29 has an aperture 31 for passage of a dose of powder.

The upper section 25 contains a hopper 5, roller 13 and block (not shown) similar to those parts of Fig 1. The cavity 15 is in the form of a slot extending along the roller. The shaft of the roller carries an indent ring 33 operating microswitches to control the operation of the apparatus, as will be described in greater detail, and a toothed wheel 35 in helical mesh with a drive pinion 37 of an electric drive unit 39 mounted in the upper section 25, on the partition wall.

The lower section 27 contains a mixing chamber 41 beneath the aperture 31 in the partition wall 29. A water inlet pipe 43 is connected to the mixing chamber at a position towards the top of the mixing chamber and an outlet pipe 45 is connected to the mixing chamber at the bottom thereof. The inlet and outlet pipes 43 and 45 pass through respective holes in the external walls of the lower section 27 of the cabinet 23, for external connection to the water supply and waste line respectively. The inlet and outlet pipes each have valve means, in the form of a control solenoid 47 and dumping mechanism 49 respectively. These parts which are located within the lower section 27.

A heater plate 51 is mounted against the lower wall of the mixing chamber, externally of the chamber.

The apparatus of Fig. 2 is particularly suitable for transfer of a hygroscopic powder, for example the effective biological grease trap and drain line powder sold under the trade mark BIOFREE, since the powder in the hopper is kept dry. Effective isolation of the storage chamber from the mixing chamber is achieved. Moreover the hinged lid 23 of the storage chamber is fitted with a sealing gasket (not shown) and is lockable.

The apparatus is provided with a control/indication panel 52 to allow the user to initiate the transfer cycle, set the desired temperature and dwell time in the mixing chamber, and receive a warning when the storage chamber needs to be refilled. Standard sensors and circuitry are employed.

In use, a transfer cycle is initiated by a user pressing a button the control panel. The drive unit 39 turns the roller clockwise until the cavity 15 is beneath the outlet of the storage chamber 5. The cavity is charged with powder and on turning of the roller through 180° the powder falls through the outlet orifice 17 into the mixing chamber. The roller is turned further until the cavity no longer communicates with the outlet orifice. The solenoid 47 is then triggered, by a microswitch operated by the indent ring 33, to open the inlet pipe 43 and allow the water to flow into the mixing chamber, the dumping mechanism 49 being in its closed position. On further movement of the roller 13 the solenoid 47 closes the inlet pipe. The heater plate 51 then operates to raise the temperature of the solution in the mixing bath. After a dwell time sufficient to ensure dissolution of the powder - for example 30 minutes - the dumping mechanism 49 is triggered to open the outlet pipe 45, and the solution flows into a drain line (not shown). After the mixing chamber has emptied the solenoid 47 is triggered to admit a charge of water pipe and wash the mixing chamber clean. The dumping mechanism 49 then closes the outlet pipe 45 and the roller is turned further, to its starting/rest position. In the apparatus of Fig. 2, which is intended for daily operation, the drive unit 39 drives the roller slowly and the dumping mechanism 49 is triggered to open, at the end of the dwell period, by a further microswitch operated by the indent ring. In other embodiments a variable electrical delay device can be employed to control the drive unit.

The apparatus of Fig. 2 is conveniently mounted on a wall above a drain inlet.

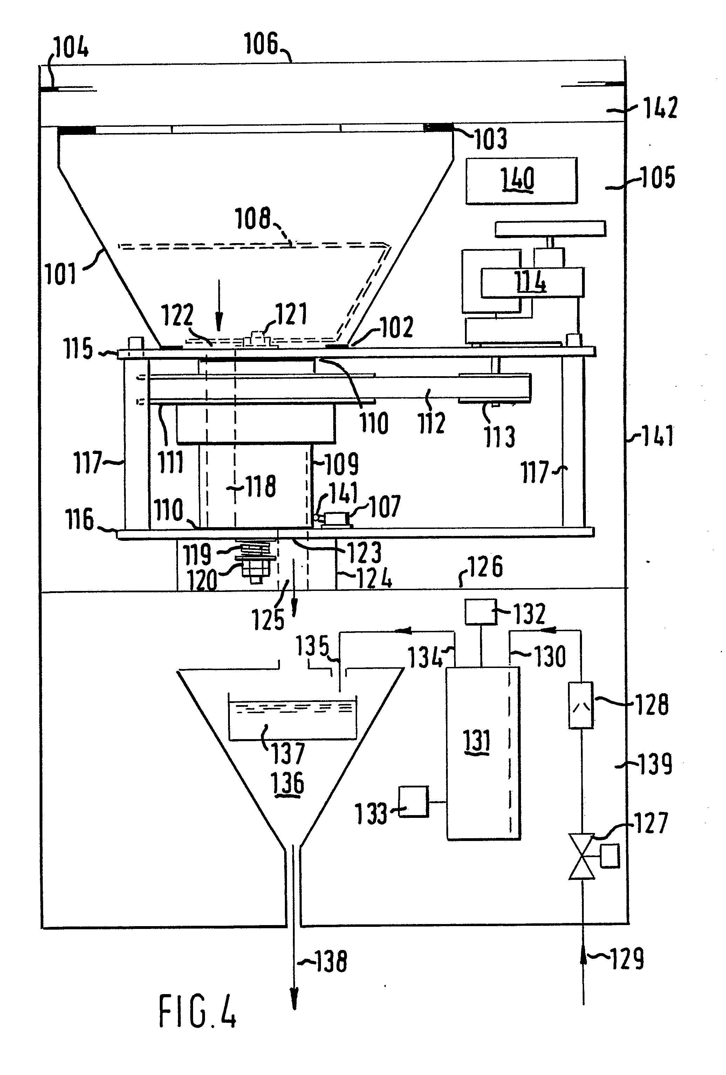

Figure 3 shows an embodiment of the invention in which the carriage is in the form of a shuttle plate 53 sandwiched between an upper plate 55 secured to the hopper 5 and a lower plate 57. The cavity 15 is a through-bore in the shuttle plate. The respective outlets 9 and 17 are through-bores in the upper and lower plates, spaced apart in the direction of movement of the shuttle plate. A drive unit (not shown) is arranged to drive the shuttle plate in a reciprocating manner.

Fig. 4 shows an apparatus which comprises an enclosure 141 which is divided into three sections, the upper 142, middle 105 and lower 139. A hopper 101 is provided in the shape of a funnel or bowl or the like with its upper rim sealed by a gasket 103. The mouth of the hopper opens into the upper section 142 which is provided with a hinged lid 106 which when closed is sealed by means of the gasket 104. One of the aims of this embodiment of the invention is to ensure that the product which is stored in the hopper 101 is effectively sealed from the surroundings and in particular from the lower section 139 os the apparatus wherein water at elevated temperatures is present, thus promoting a humid atmosphere.

The lower rim of the hopper 101 is sealed by a gasket 102 to an upper plate 115 which also carries a drive motor 114. The upper plate 115 is provided with a circular opening 122 which is the only means by which the product can leave the hopper. A drum 109 is provided having a vertical axis and which at rest would be in the position shown in Fig. 4 with its vertical offset circularly cylindrical bore 118 aligned with the opening 122 in the plate 115. In this position the product in the hopper will fill the bore 118 by means of gravity. Optionally, but preferably, the drum 109 carries a central shaft 121 onto which the drum is assembled and through the upper protruding portion of which is passed a shaped rod 108. This rotates with the drum when driven by the motor and ensures that the product moves freely in the hopper and falls freely into the drum bore 118.

The drum 109 is assembled between the upper plate 115 and a lower plate 116, being held together by means of the central shaft 121 under compression by means of the spring 119 secured by the locknuts 120.

A seal is provided by incorporating sealing faces 110 at each end of the drum 118. These seals are preferably of a very low friction material such as polytetrafluoroethylene. The drum 109 incorporates a pulley 111 allowing the drum to be connected by a drive belt 112 to a motor pulley 113. The drum 109 also incorporates an operating protrusion 141 which when aligned with a microswitch 107 will operate the said microswitch. The drive motor 114 slowly rotates the drum when switched on under the control of timing means 140 taking the product contained within the bore 118 from its position underneath the opening 122 in the upper plate 115 to register with a similar opening 123 in the lower plate 116. As the drum bore slowly passes over the opening 123, it discharges by gravity the product held in the bore through the opening 123 and into a mixing chamber 137 through an opening 125 in a closed cell seal 124 which is located between the opening in the lower plate 116 and a partition 126 to the lower section 139 of the enclosure. The drum continues to rotate until the bore 118 is once again aligned with the opening 122 in the upper plate 115 whence it is again filled from the hopper by means of gravity. To ensure that the drum always stops in a position whereby the bore is aligned with the opening 122, the microswitch 107 is positioned so as to be switched by the operator 141 carried by the drum. The microswitch is connected electrically to the timer means 140, which when influenced by the action of the microswitch 107 removes the power from the drive motor 114.

Pillars 17 are fixed to the lower plate 116 and protrude through the upper plate 115 but are not fixed thereto, their purpose being to prevent the lower plate from turning under the influence of the rotation of the drum 109. If desired the drum and plate assembly may be tensioned by provision of springs mounted between pillars 117 and the upper plate 115.

Preferably the apparatus operates in sequence under the influence of the timer means 140.

A water inlet 129 connects to an electrically operated water valve 127 which is normally closed. In operation the timer means 140 actuates the valve 127 for a preset time period and admits a volume of water to a holding tank 131 via inlet nozzle 130 sufficient to ensure that the tank is full. The water reaches the tank via a control device 128 which ensures that the rate of water flow is a constant pre-set value regardless of variations in water pressure at the inlet 129.

The tank 131 incorporates a heater 132 and a thermostat 133 which ensures that the water temperature can be raised to a pre-set value. The timing means 140 is set to allow the heater to operate for a sufficient period of time to enable the water to reach the desired temperature. The timing means then once more opens the water valve 127 for a pre-set period sufficient to allowed a desired volume of heated water to be displaced and forced via exit tube 134 from the holding tank 131 into the mixing chamber 137 via discharge nozzle 35. Preferably the timer means ensures that the volume of water discharged from the holding tank exceeds the volume of water capable of being held by the mixing chamber.

Any excess water overflows from the mixing chamber into a discharge funnel 136 and out of the apparatus via a discharge hose connected to the funnel outlet 138.

The timing means then actuates the drive motor 114 which rotates the drum in the manner already described and discharges a fixed dose of product into the mixing chamber which now holds water at the desired temperature.

The timer means 140 is pre-set to allow a suitable "dwell" period for the product and water to remain together in the mixing chamber before activating the discharge sequence. This it does by actuating the water valve 127 for a pre-set period so as to admit a volume of water into the holding tank which by now will have again heated the water admitted in the previous part of the sequence to the temperature required. This heated water will be displaced and discharged into the mixing chamber 137 via the tube 134 and discharge nozzle 135. The heated water so admitted to the mixing chamber will displace the product and water mixture, which will overflow from the mixing chamber into the funnel 136 and out of the apparatus via the opening 138.

The timer means 140 may comprise a mechanical, electromechanical or electronic means whereby the apparatus may be set to operate at pre-set intervals hourly, daily, weekly or as desired. The timer means may also be set to discharge a single, double, triple or greater number of product doses when it operates. The timer means may also be set to operate automatically throughout its entire sequence or to halt at one or more pre-set stages of the sequence until allowed to proceed by means of manual or electrical actuation. The timer means may also be connected to indicate by visual or audible means the stage which it has reached in its timing sequence.

## Claims

1. Apparatus for dispensing a dose of a flowable medium, comprising a storage chamber for the medium, the storage chamber having a gravity-fed outlet; a medium transfer carriage having a surface to prevent the flow of medium through the outlet and a cavity which is selectively communicable with the outlet; and means for moving the carriage beween a position in which the outlet communicates with the cavity to a position in which it does not, in which position medium in the cavity may leave it under gravity.

2. Apparatus according to claim 1, which comprises a mixing chamber into which medium leaving the cavity falls, the mixing chamber comprising an inlet for liquid and an outlet for the medium-containing liquid.

3. Apparatus according to claim 2, comprising valve means to control the admission of liquid into the mixing chamber and controlling the exit of the medium-containing liquid from the mixing chamber.

4. Apparatus according to mixing claim 3, comprising control means for controlling the operation of said valve means as a function of the movement of the carriage.

5. Apparatus according to claim 2,3 or 4 comprising means to heat the liquid.

6. Apparatus according to claim 5, comprising a tank where sufficient liquid is admitted and heated to a suitable temperature before being admitted to the mixing chamber.

7. Apparatus according to any preceding claim, wherein the carriage is a drum.

8. Apparatus according to claim 7, wherein the apparatus comprises a housing for the drum, the drum being a close fit in the housing and the housing being formed at one end with an aperture which forms or connects with the outlet from the storage chamber and at the other end with an outlet through which medium in the cavity may leave it under gravity.

9. Apparatus according to claim 7, wherein the drum has a vertical axis and the apparatus comprises plates arranged at either end of the drum, with one plate having an inlet communicating with the storage chamber and the other plate having an outlet through which the medium may leave the cavity in the drum.

10. Apparatus according to any of claims 1 to 6, wherein the carriage is a plate and the cavity is a through-aperture in the plate, the plate being sandwiched slidably between a top plate having a through-aperture which forms or connects with the outlet from the storage chamber and a bottom plate having a through aperture, displaced from the through-aperture of the top plate in the direction of movement of the carriage, through which medium in the cavity may leave it under gravity.

11. A method of dispensing a solution or dispersion of a product, using an apparatus having a storage chamber for the product, with a gravity-fed outlet; a product transfer carriage having a surface to prevent the flow of the product through the outlet and a cavity which is selectively communicable with the outlet; means for moving the carriage between a position in which the outlet communicates with the cavity to a position in which it does not, in which position the product in the cavity falls into a mixing chamber of the apparatus, the mixing chamber having an inlet and an outlet; valve means for controlling the admission of liquid into the mixing chamber and controlling the exit of the mixture from the mixing chamber; and means for controlling the valve means in response to the movement of the carriage; the method comprising moving the carriage from a position in which the cavity communicates with the outlet and receives a dose of the product, to a position in which said surface prevents the flow of the powder through the outlet and the product falls from the cavity into the mixing chamber; admitting liquid into the mixing chamber, before, during or after the admission thereto of the product; allowing a dwell time, for the product to dissolve or disperse in the water; and operating said outlet valve means to dispense the solution or dispersion.

12. A method according to claim 11 wherein the product is a drain line waste degradation product and the solution or dispersion is dispersed into a drain line .

FIG.1

FIG.3

FIG.2

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 601 862 (A.S. LEGG) <br> * Whole document * | 1,2 | E 04 H 3/20 <br> C 02 F 1/68 |
| A | | 8-11 | |
| A | GB-A- 183 357 (I.G. PERRETT) <br> * Whole document * | 1,2,7,8 ,9,11 | |
| A | GB-B-1 383 403 (MILTON ENG. WORKS) <br> * Page 3, line 73 - page 4, line 115; figures * | 2,3,4,7 ,11 | |
| A | FR-A- 563 409 (S.A. LUCHAIRE) <br> * Whole document * | 1,7,8,9 | |
| A | FR-A-1 223 720 (M. GENET) <br> * Abstract; figures * | 7 | |
| A | DE-U-8 514 816 (D. WERNER) | | |

TECHNICAL FIELDS
SEARCHED (Int. Cl.4)

B 01 F
B 65 G
E 04 H
A 47 K
C 02 F

The present search report has been drawn up for all claims

| Place of search | Date of completion of the search | Examiner |
|---|---|---|
| THE HAGUE | 23-03-1989 | VAN ROLLEGHEM F.M. |